# FASCICULE DE BREVET EUROPEEN

(11) **EP 0 503 719 B1**
(45) Date de publication et mention de la délivrance du brevet: **25.10.1995**
(21) Numéro de dépôt: 92200625.9
(22) Date de dépôt: 04.03.1992
(51) Int. Cl.: G01L 1/22, G01L 1/26, G01G 3/14

(54) **Capteur à jauge de contrainte**
Wandler mit Dehnungsmessstreifen
Strain gauged transducer

(30) Priorité: 08.03.1991 FR 9102814
(43) Date de publication de la demande: 16.09.1992
(73) Titulaire: LABORATOIRES D'ELECTRONIQUE PHILIPS, 94450 Limeil-Brévannes (FR); Philips Electronics N.V., 5621 BA Eindhoven (NL)
(72) Inventeur: Polaert, Rémy, F-75008 Paris (FR); Hazan, Jean-Pierre, F-75008 Paris (FR); Maniguet, François, F-75008 Paris (FR)
(74) Mandataire: Landousy, Christian

(56) Documents cités:
- WO-A-87/07019
- DE-A- 2 040 969
- DE-A- 2 342 023
- DE-A- 2 938 507
- DE-B- 1 001 832
- DE-B- 1 648 692
- FR-A- 2 424 523
- FR-A- 2 425 061
- FR-A- 2 648 559

## Description

L'invention concerne un capteur à jauge de contrainte comprenant :
- une jauge de contrainte pressée entre des membres presseurs, la jauge de contrainte comprenant un substrat en forme de lame muni de détecteurs de contrainte,
- au moins un ressort disposé entre ledit substrat et un des membres presseurs, pour subir conjointement avec ledit substrat des déformations par des pressions exercées par les membres presseurs.

Un tel capteur trouve son application dans la détection ou la mesure de forces notamment dans des capteurs de forces. Ceux-ci peuvent permettre de réaliser par exemple des balances, des détecteurs de charges,...

Il est connu dans l'analyse de la rigidité des matériaux de placer un échantillon sur deux appuis puis d'opérer une pression de l'autre côté de l'échantillon au milieu des deux appuis en exploitant son aptitude à la flexion. Une disposition analogue est mise en oeuvre pour mesurer des forces dans des capteurs utilisant des jauges de contrainte formées de résistances déposées sur un support rigide : deux appuis sont solidaires d'un premier membre presseur et l'appui placé en opposition est solidaire d'un second membre presseur. Ceci est par exemple décrit dans "Strain sensitivity of thick-film resistors" J.S. SHAH IEEE Trans. CHMT-3, n°4, 1980, p.554. Les apppuis peuvent avoir la forme d'un couteau. Les couteaux doivent être bien parallèles entre eux et ceci nécessite un usinage précis des différents organes.

La jauge de contrainte est généralement munie d'éléments résistifs dont la valeur varie avec la déformation du support sur lequel ils sont placés. On utilise généralement plusieurs éléments résistifs qui sont connectés entre eux selon un montage en pont de Wheatstone. Ceci permet d'obtenir un signal électrique directement proportionnel à la flexion du support indépendamment des variations de température.

On connaît ainsi le document DE-B-1.001 832 qui décrit un élément capteur ayant une structure formée d'un ressort symétrique à double lame, l'une des lames étant munie d'éléments résistifs, la lame en se déformant permettant de déterminer des forces de pression appliquées sur l'élément capteur. Les deux lames sont fixées l'une à l'autre, de sorte que leurs déformations sont égales et de sens opposé. On connaît également le document FR-A-2424523 qui décrit un système de pesée par jauges de contrainte solidaires d'une lame flexible. Celle-ci est en appui sur des entretoises souples par exemple des blocs de caoutchouc. La lame flexible est fixée à chaque entretoise par des écrous vissés dans des goujons noyés dans le caoutchouc.

Pour que la mesure obtenue par un capteur soit linéaire et fidèle, il est nécessaire que le support utilisé ait des propriétés mécaniques linéaires et reproductibles. C'est l'intérêt des jauges constituées par une lame de céramique sur laquelle est déposée par sérigraphie une encre résistive. La lame de céramique présente en effet une plage élastique très étendue arrêtée seulement par la rupture de la lame de céramique elle-même. Il n'y a pas de déformation plastique ni d'hystérésis. Afin de pouvoir opérer jusqu'au voisinage du point de rupture, il faut pouvoir disposer d'un moyen qui empêche de franchir ce point.

D'autre part, un capteur à jauge de contrainte est principalement destiné à être utilisé dans des applications faisant l'objet d'une grande diffusion dans le public, par exemple, des balances ou des capteurs de force de toutes natures. Pour ces applications destinées à une large diffusion, pour des raisons de coût, il n'est pas possible d'utiliser des organes parfaitement usinés. Les organes que l'on est conduit à utiliser sont imparfaits quant à leur planéité, leur parallélisme, leur structure. Les technologies mises en oeuvre doivent donc s'affranchir de contraintes liées aux grandes séries en particulier des dispersions sur les tolérances mécaniques des éléments constituants. Il est à noter que la flexibilité qu'il faut exploiter pour les lames céramiques utilisées est de faible amplitude. Par ailleurs, les lames céramiques utilisées pour les applications de large diffusion sont des lames du commerce, généralement non polies, avec une rugosité de surface, ou une cambrure pouvant être du même ordre de grandeur que l'amplitude de flexion. Les tolérances mécaniques ne sont pas régulières de lame à lame. Un réglage peut être correct pour une lame et être soit destructif soit provoquer des amplitudes trop faibles de flexion pour une autre lame. Il est donc difficile de limiter ou de régler, en pratique, la flexion maximale que peut supporter une telle lame pour opérer correctement sans se briser.

Le problème qui se pose est donc, à partir de lames céramiques courantes, de disposer de capteurs à jauge de contrainte ayant des caractéristiques reproductibles qui ne soient pas dépendantes des tolérances mécaniques variables des lames. Ces tolérances variables concernent leur rugosité, leur cambrure, leur épaisseur, leur flexibilité ou autres.

La solution consiste en ce que ledit substrat s'appuie, en montage flottant, exclusivement sur ledit ressort, ledit ressort étant formé d'une lame courbée ayant une flexibilité supérieure à celle du substrat.

Un ressort à lame courbée est bien adapté à une industrialisation. Le substrat qui reçoit l'action d'une force appliquée va se déformer tout en écrasant le ressort à lame courbée sur lequel il est en appui entraînant de ce fait une déformation dudit ressort. Du fait de l'écrasement dudit ressort, le substrat se rapproche d'un des membres presseurs. Il est nécessaire que les flexibilités du substrat et du ressort à lame courbée soient telles que l'un et l'autre se déforment, le ressort se déformant plus que le substrat. Les flexibilités du ressort et du substrat doivent être telles que le substrat n'atteigne pas sa limite de rupture lorsque le déplacement maximal est atteint. Ces déplacements sont limités par des butées.

Un ressort à lame courbée présente une face concave et une face convexe. Le substrat peut être en appui sur le ressort sur l'une ou l'autre face.

Lorsque le substrat est placé du côté de la face concave dudit ressort, ce sont des bordures dudit substrat qui prennent appui sur le ressort. Les bordures peuvent être munies de cales d'appui.

Avantageusement, selon l'invention on combine la faible amplitude de déformation atteinte par un substrat déformé avec une amplitude de déformation plus grande atteinte par un ressort. On peut ainsi exploiter la quasi-totalité de la déformation du substrat sans pour cela franchir sa limite de rupture.

Dans toutes ces situations les déplacements peuvent être limités par des butées qui peuvent être placées soit sur le substrat soit sur le ressort soit sur au moins sur un membre presseur. Cela permet de surcharger le capteur bien au-delà de la charge de rupture du substrat sans briser ce dernier.

L'invention sera mieux comprise à l'aide des figures suivantes données à titre d'exemples non limitatifs qui représentent :
Figure 1 : une représentation schématique d'un art connu.
Figure 2 : un premier type de capteur à jauge de contrainte selon un premier mode de réalisation de l'invention.
Figure 3 : un premier type de capteur à jauge de contrainte selon un second mode de réalisation de l'invention.
Figures 4A,4B : différentes possibilités de positionnement des butées selon les premier et second modes de réalisation.
Figures 5A,5B : deux modes de montage des butées.
Figure 6 : une courbe de variation de la sensibilité d'un capteur en fonction de la charge appliquée selon le premier mode de réalisation.
Figure 7 : un schéma des bordures crénelées du substrat.
Figures 8A, 8B : une vue en coupe et une vue de dessus d'un substrat muni de cales d'appui.
Figure 9 : un schéma d'un berceau muni des cales d'appui.

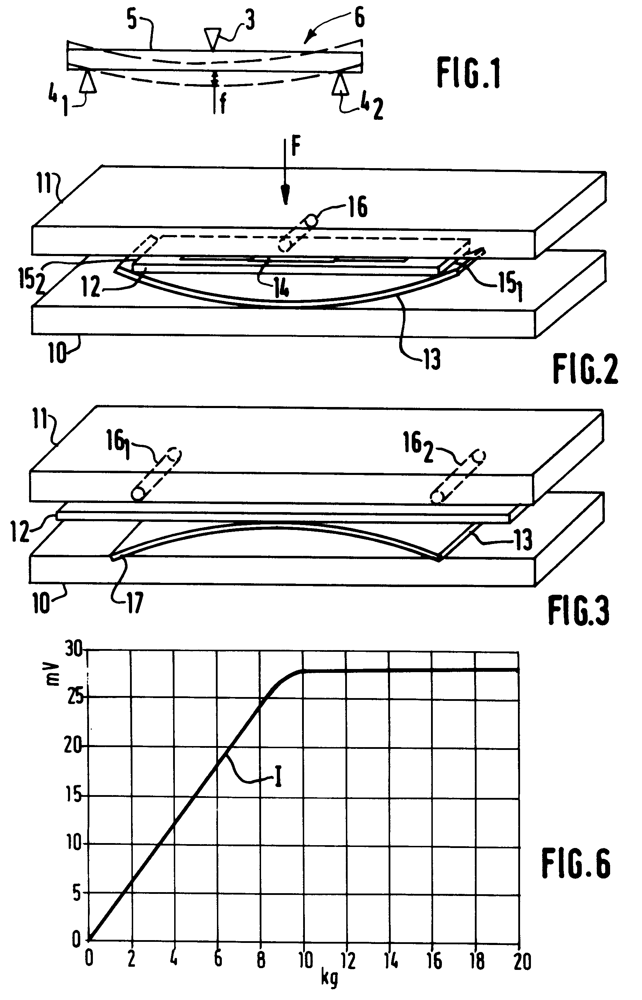

La figure 1 est une représentation schématique d'un art connu pour lequel un substrat 5 d'une jauge de contrainte 6 est placé sur deux couteaux inférieurs 4₁, 4₂, un couteau supérieur 3 appliquant une force de pression. Sous l'action de la force, le substrat fléchit et subit une flèche f. Dans le cas de substrats assez rigides comme par exemple les lames de céramique, cette flèche est très faible de l'ordre de 5.10⁻² mm. Pour éviter que la lame de céramique se brise sous l'action de forces trop élevées, il faut alors limiter la valeur que peut prendre cette flèche f.

D'autre part, ces lames de céramique formées souvent d'alumine frittée ont une rugosité de surface et une cambrure sensiblement du même ordre de grandeur que la flèche f. Pour limiter la flèche prise par la lame, il faut donc utiliser des cales d'épaisseur très réduite. Compte tenu des écarts de cambrure ceci s'avère très délicat en pratique car les lames ont des dispersions dans leurs caractéristiques mécaniques qui peuvent être très grandes. Il apparaît ainsi évident qu'il est très difficile de maîtriser les limites de flèche car si l'on privilégie le non-franchissement de la limite de rupture de la lame on risque alors d'avoir une course trop faible pour opérer des mesures de contrainte. Et si l'on privilégie l'étendue de la course, on peut, pour certaines lames, atteindre la limite de rupture et briser la lame.

Le capteur selon l'invention étant destiné à utiliser des lames de céramique sans traitement de surface préalable, il faut donc chercher à s'affranchir de ces difficultés.

La figure 2 représente un premier type de capteur selon l'invention pour lequel le ressort est constitué d'une lame courbée. Ce capteur comprend deux membres presseurs 10, 11 sur lesquels agissent une force de pression F. Celle-ci est transmise à une jauge de contrainte qui prend appui sur un ressort à lame courbée 13. La jauge de contrainte est formée d'un substrat 12 en forme de lame (appelé par la suite substrat) sur lequel sont disposés des détecteurs de contrainte par exemple la résistance 14. Plusieurs tels détecteurs sont disposés à la surface du substrat. Pour des questions de sensibilité à la contrainte et d'insensibilité aux variations de température, ces détecteurs sont habituellement montés en pont de Wheastone.

Selon un premier mode de réalisation de ce premier type de capteur représenté sur la figure 2, le substrat prend appui sur la face concave du ressort à lame. Il est disposé en montage flottant, c'est-à-dire que les extrémités du substrat 12 et du ressort 13 ne sont pas solidarisées. De plus, le substrat 12 appuie exclusivement sur le ressort 13. Le substrat appuie donc sur le ressort 13 par des bordures 15₁, 15₂.

Le membre presseur 11 transmet la force appliquée F à l'aide d'un élément 16 qui peut :
. soit agir pratiquement ponctuellement par exemple une bille ou une pièce de faible surface de contact,
. soit agir sur une certaine longueur dans une direction perpendiculaire à la direction de la longueur du substrat par exemple une tige qui peut être cylindrique pour s'affranchir des écarts de planéité,
. soit agir dans la direction précédente et dans la direction qui lui est perpendiculaire sur une certaine longueur par exemple à l'aide de deux tiges cylindriques fixées entre elles et formant un croisillon. On s'affranchit dans ce cas des écarts de planéité dans les deux directions.

Cet élément 16 transmet l'action de la force appliquée F sensiblement au centre du substrat de façon à agir en opposition avec les deux bordures 15₁, 15₂, qui prennent appui sur le ressort 13. Sous l'action de la force F, le substrat 12 de la jauge de contrainte va fléchir mais cette action provoque également l'écrasement du ressort 13 sur le membre presseur 10. La flexibilité du ressort 13 est déterminée pour qu'en fin d'écrasement le substrat ne puisse pas se briser, le substrat ayant alors trouvé un appui central.

La figure 3 représente un second mode de réalisation de ce premier type de capteur dans lequel le substrat 12 prend appui sur la face convexe du ressort 13. Dans ce cas, le membre presseur 11 applique la force de pression F sur le substrat 12 à l'aide de deux éléments 16₁, 16₂, placés vers les extrémités du substrat 12. Ainsi la force de réaction du ressort 13 sur le substrat 12 s'oppose aux forces qui agissent sur le substrat 12 par les éléments 16₁, 16₂. De la même manière que précédemment, les flexibilités du substrat et du ressort sont déterminées pour qu'en fin d'écrasement le substrat ne puisse pas se briser. Il est possible de retenir une des extrémités du ressort 13 par exemple dans une encoche 17 pratiquée dans le membre presseur 10. Tout autre mode de maintien équivalent convient.

En fonctionnement les membres presseurs 10, 11 sont mobiles l'un par rapport à l'autre. Il est nécessaire de leur donner cette mobilité dans la direction du déplacement tout en les maintenant pour les autres directions. Ceci peut par exemple être obtenu à l'aide de glissières (non représentées).

Selon l'invention, on ne contrôle plus directement la flèche maximale que peut prendre le substrat 12 sans se rompre. Ce contrôle s'opère indirectement en contrôlant le déplacement maximal que peut subir le ressort 13 lors de son écrasement par le substrat. Ce contrôle est réalisé à l'aide de butées.

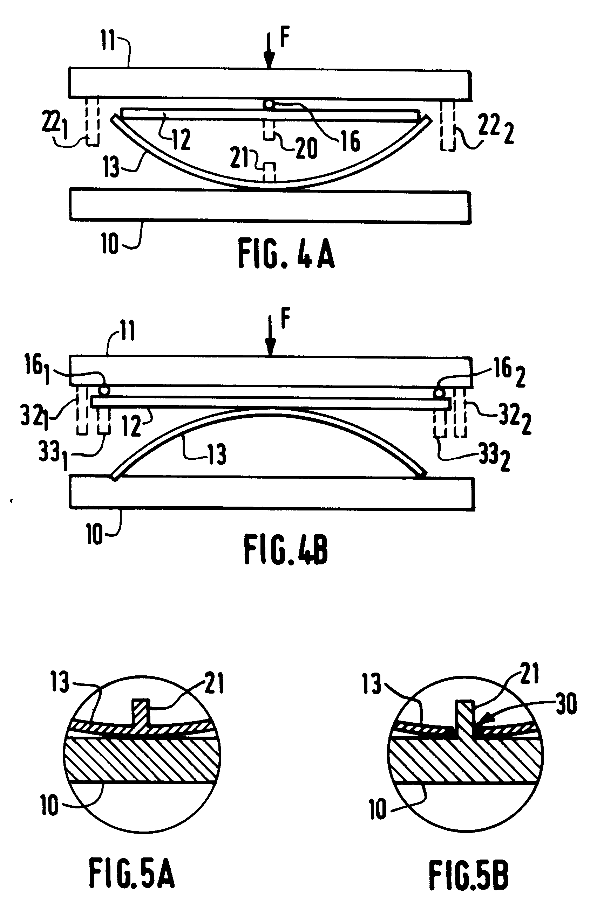

La figure 4A se rapporte au premier mode de réalisation représenté sur la figure 2. Les mêmes éléments sont munis des mêmes repères. Sur la figure 4A sont indiquées à titre d'exemple trois possibilités de positionnement des butées. Ces trois possibilités sont, préférentiellement, à utiliser indépendamment l'une de l'autre.

Une première possibilité consiste à placer une butée 20 sous le substrat 12 sensiblement en son centre. Ainsi lors de l'application de la force F, la limite maximale de flexion que peut subir le substrat 12 et la limite maximale d'écrasement que peut subir le ressort 13 sont conjointement obtenues lorsque la butée 20 vient en contact avec la face concave du ressort 13.

Une seconde possibilité consiste à placer une butée 21 sur la face concave du ressort 13, sensiblement en son centre. Les limites maximales précédentes sont alors atteintes lorsque la butée 21 vient en contact avec le substrat 12.

Une troisième possibilité consiste à placer deux butées 22₁, 22₂ sur l'un des membres presseurs par exemple le membre presseur 11. L'avantage de cette disposition est, en cas de surcharge, de n'apporter aucune contrainte supplémentaire au substrat lui-même.

Selon l'une quelconque de ces possibilités, la taille des butées est déterminée en fonction des flexibilités du substrat 12 et du ressort 13 et de la distance qui sépare les membres presseurs 10, 11. Cette taille de butée reste alors la même pour des lots de substrats, respectivement de ressorts, ayant des caractéristiques sensiblement homogènes.

La figure 4B se rapporte au second mode de réalisation représenté sur la figure 3. D'une manière analogue à ce qui vient d'être décrit pour la figure 4A, il est possible d'utiliser :
- soit deux butées 32₁, 32₂ placées sur un des membres presseurs, par exemple le membre presseur 11, extérieurement au substrat 12,
- soit deux butées 33₁, 33₂ placées aux extrémités du substrat 12 qui viennent prendre appui sur le membre presseur 10 en limite d'écrasement. Dans ce cas, les butées 33₁, 33₂ sont préférentiellement placées en face des organes 16₁, 16₂ sur la face opposée du substrat 12.

Toutes les butées peuvent être constituées de pièces rapportées fixées par collage ou soudure par exemple. Elles peuvent aussi être réalisées dans la masse de l'élément auquel elles se rapportent.

Ainsi le montage de la butée 21 de la figure 4A peut se concevoir par exemple selon le schéma de la figure 5A. Dans ce cas, la butée est une butée 21 réalisée dans la masse du ressort 13. Un autre montage peut se concevoir par exemple selon le schéma de la figure 5B. Dans ce cas, la butée est une butée 21 fixée au membre presseur 10, cette butée 21 traversant une ouverture 30 pratiquée dans le ressort 13. La butée 21 peut aussi être constituée d'une vis qui peut se déplacer dans le membre presseur 10 afin de régler la longueur de la butée.

Une application d'un capteur à jauge de contrainte selon l'invention consiste par exemple à détecter le poids de charges placées sur le capteur. Ce poids doit pouvoir être déterminé pour une certaine gamme de poids. Si la charge disposée sur le capteur dépasse la limite de ladite gamme, le capteur ne doit pas se rompre. Une telle application se rencontre par exemple pour des plaques tactiles munies de jauges de contrainte. La force appliquée F peut être un poids ou une force de pression.

Dans le cas d'un substrat en céramique, il a été observé que la flèche maximale admissible est très faible. Un substrat de 31 x 16 x 1 mm posé sur deux appuis distants de 25 mm présente une flèche maximale de 5.10⁻²mm pour un poids au centre de 10 kg. Sans l'apport de l'invention et compte tenu des irrégularités de surface et du gauchissement, on constate qu'il serait difficile d'équiper chaque substrat des butées nécessaires au contrôle d'une flèche de 5.10⁻²mm maximum :
- soit que cela entraînerait des difficultés d'usinage des butées, ce qui est inadmissible pour un produit de grande diffusion,
- soit que les apports de colle/soudure ne pourraient pas être correctement dosés.

Grâce à l'invention on surmonte ces difficultés à l'aide d'un ressort à lame courbée par exemple en acier à ressort, en CHRYSOCAL, ou tout autre matériau ayant les propriétés élastiques adaptées. Avec le substrat en céramique précédent on a, par exemple, utilisé un ressort à lame en acier à ressort ayant au repos un rayon de courbure de 240 mm ayant une élasticité telle que la flèche au centre était d'environ 0,5 mm lorsqu'un poids de 10 kg chargeait le ressort portant sur deux appuis distants de 31 mm. Ainsi, pour cet exemple, le rapport de flexibilité du ressort et du substrat était environ égal à 10.

Avec une telle disposition, des butées spécifiques n'étaient pas indispensables car pour une charge égale ou supérieure à 10 kg le ressort à lame était presque complètement aplati et le substrat venait en contact avec le ressort.

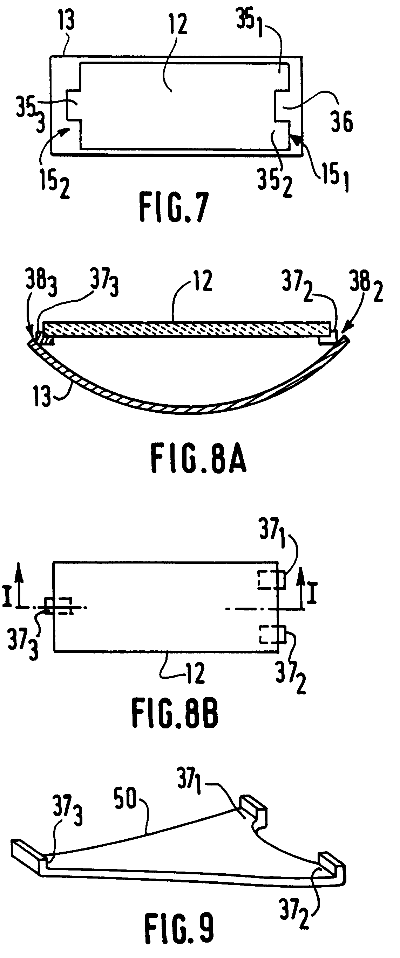

La courbe I de sensibilité d'un tel capteur (fig. 2) est représentée sur la figure 6 où sont indiqués en abscisses le poids en kg de la charge appliquée et en ordonnées le signal électrique délivré par la jauge de contrainte placée sur le substrat. On observe que la courbe I présente deux parties : une partie croissant linéairement entre les poids 0 à 8 kg environ et une partie constante entre les poids 10 à 20 kg environ. La zone de jonction entre ces deux parties aux environs de 9 kg se rapporte à la charge nécessaire pour que le substrat vienne en appui sur le ressort. Le signal électrique délivré par la jauge entre 0 et 8 kg est parfaitement proportionnel au poids. Ce signal devient constant lorsque le substrat arrive en contact avec le ressort. Il est donc possible de surcharger le capteur sans rompre le substrat de céramique. La position de la zone de jonction est reproductible d'un substrat à l'autre et ne dépend pas des irrégularités de surface du substrat. Cette zone de jonction dépend de la reproductibilité de la déformation élastique du ressort. En effet, le fléchissement du ressort est environ 10 fois plus important que celui du substrat. C'est donc la reproductibilité des caractéristiques du ressort qui permet de déterminer avec précision la charge limite.

Sur la figure 2, le contact entre le substrat 12 et le ressort 13 s'opère par des bordures 15₁, 15₂ du substrat. En fonctionnement, il peut arriver que le contact d'une bordure de substrat s'opère non pas sur une bordure complète mais sur une partie seulement de la bordure voire sur un point. Lorsque l'on considère la qualité des appuis du substrat par les parties des deux bordures, on comprend que ces parties vont pouvoir se déplacer le long de leurs bordures respectives lorsque la charge va varier. Ceci peut se traduire par un défaut de linéarité aux faibles charges.

La figure 7 permet de corriger ce défaut. Elle représente, vu de dessus, le ressort 13 sur lequel est placé le substrat 12 en appui par les bordures 15₁, 15₂. Pour garder une bonne linéarité, on donne aux bordures une forme crénelée avec, pour la bordure 15₁, deux créneaux extrêmes 35₁, 35₂ séparés par un évidemment 36 et, pour la bordure 15₂, un créneau 35₃ de telle sorte que le substrat 12 s'appuie en trois points sur le ressort 13. Un appui sur les créneaux 35₁, 35₂, 35₃ permet ainsi d'assurer une bonne reproductibilité de la courbe de linéarité d'un capteur à l'autre.

Dans le but d'obtenir un bon appui et une bonne linéarité, il est possible de faire reposer le substrat sur des cales d'appui. Ceci est représenté sur les figures 8A, 8B. Le substrat 12 et les cales d'appui de la figure 8A sont représentés d'après la coupe I-I de la figure 8B. On utilise trois cales d'appui 37₁, 37₂, 37₃ disposées de part et d'autre du substrat pour obtenir un équilibre stable. Préférentiellement ces cales d'appui épousent l'arête du substrat afin de remonter le long de la bordure du substrat. Ainsi en fonctionnement les points de contact 38₁, 38₂, 38₃ peuvent se déplacer sur le ressort à lame courbée.

Ces cales d'appui peuvent être fixées par collage ou tout autre moyen au substrat 12. Il est possible de les rendre solidaires les unes des autres en les reliant entre elles. Ainsi elles peuvent faire partie d'un berceau 50, représenté sur la figure 9, qui comprend les trois cales d'appui 37₁, 37₂, 37₃ reliées entre elles par une armature ou des nervures ou toute autre forme de solidarisation. Ce berceau 50 doit avoir un léger galbe tel que le contact entre le substrat 12 et le berceau 50 s'opère par les cales d'appui.

## Revendications

1. Capteur à jauge de contrainte (12, 14) comprenant :
- une jauge de contrainte pressée entre des membres presseurs (10, 11), la jauge de contrainte comprenant un substrat (12) en forme de lame muni de détecteurs de contrainte (14),
- un ressort (13) disposé entre ledit substrat (12) et un des membres presseurs (10, 11) pour subir conjointement avec ledit substrat des déformations par des pressions exercées par les membres presseurs (10, 11)
caractérisé en ce que ledit substrat (12) s'appuie, en montage flottant, exclusivement sur ledit ressort (13), ledit ressort étant formé d'une lame courbée ayant une flexibilité supérieure à celle du substrat (12).

2. Capteur selon la revendication 1 ledit substrat subissant des déplacements par rapport à au moins un des membres presseurs, caractérisé en ce que lesdits déplacements sont limités par des butées (20) (21) (22₁, 22₂) (32₁, 32₂) ₍33₁, 33₂) qui empêchent le substrat (12) d'atteindre des limites de rupture.

3. Capteur selon la revendication 2 caractérisé en ce que le ressort (13) à lame courbée ayant une face concave et une face convexe, des bordures (15₁, 15₂) dudit substrat (12) prennent appui sur ledit ressort (13) du côté de ladite face concave.

4. Capteur selon la revendication 3 caractérisé en ce que pour limiter les déplacements dudit substrat (12) vers ledit ressort (13) au moins une butée (20) (21) est placée soit sur une partie centrale dudit substrat soit sur une partie centrale dudit ressort, les deux parties centrales se faisant mutuellement face.

5. Capteur selon la revendication 3 caractérisé en ce que pour limiter les déplacements dudit substrat (12) vers ledit ressort (13), une ouverture (30) est ménagée dans une partie centrale dudit ressort (13) pour laisser passer une butée (21) placée sur le membre presseur (10) qui supporte ledit ressort (13).

6. Capteur selon une des revendications 3 à 5 caractérisé en ce que les bordures (15₁, 15₂) dudit substrat (12) qui prennent appui sur ledit ressort (13) possèdent une forme crénelée pour limiter l'appui aux créneaux (35₁, 35₂, 35₃) des bordures (15₁, 15₂).

7. Capteur selon une des revendications 3 à 6 caractérisé en ce que les bordures (15₁, 15₂) dudit substrat (12) prennent appui sur ledit ressort (13) à l'aide de cales d'appui (37₁, 37₂, 37₃).

8. Capteur selon la revendication 7 caractérisé en ce que les cales d'appui sont reliées entre elles par une armature (50).

9. Capteur selon une des revendications 1 ou 2 caractérisé en ce que le ressort (13) à lame courbée ayant une face concave et une face convexe, une partie centrale dudit substrat (12) prend appui sur une partie centrale dudit ressort (13) du côté de la face convexe.

10. Capteur selon la revendication 9 caractérisé en ce qu'au moins une butée (32₁, 32₂) (33₁, 33₂) est placée soit sur les parties extrêmes du substrat soit sur un des membres presseurs (10, 11).

## Patentansprüche

1. Dehnungsmeßstreifen-Wandler (12, 14) mit:
- einem zwischen Druckglieder (10, 11) gedrückten Dehnungsmeßstreifen, wobei der Dehnungsmeßstreifen ein mit Belastungsdetektoren (14) versehenes plättchenförmiges Substrat (12) umfaßt,
einer zwischen dem Substrat (12) und einem der Druckglieder (10, 11) angebrachten Feder (13), um zusammen mit dem Substrat durch von den Druckgliedern (10,11) ausgeübte Drücke verformt zu werden,
dadurch gekennzeichnet, daß das Substrat (12) bei schwebender Montage ausschließlich gegen die genannte Feder (13) anliegt, wobei die Feder von einem gebogenen Blatt gebildet wird, die eine größere Biegsamkeit aufweist als das Substrat (12).

2. Wandler nach Anspruch 1, wobei das Substrat bezüglich mindestens einem der Druckglieder Verschiebungen ausgesetzt ist, dadurch gekennzeichnet, daß die Verschiebungen durch Anschläge (2) (21) (22₁, 22₂) (32₁, 32₂) (33₁, 33₂) begrenzt werden, die das Substrat (12) daran hindern, die Bruchgrenzen zu erreichen.

3. Wandler nach Anspruch 2, dadurch gekennzeichnet, daß die Feder (13) mit gebogenem Blättchen eine konkave Seite und eine konvexe Seite hat, wobei Ränder (15₁, 15₂) des Substrats (12) an der genannten Feder (13) an der konkaven Seite anliegen.

4. Wandler nach Anspruch 3, dadurch gekennzeichnet, daß zur Begrenzung der Verschiebungen des Substrats (12) in Richtung der Feder (13) mindestens ein Anschlag (20) (21) entweder auf einem mittleren Teil des Substrats oder auf einem mittleren Teil der Feder plaziert ist, wobei die beiden mittleren Teile einander zugewandt sind.

5. Wandler nach Anspruch 3, dadurch gekennzeichnet, daß zur Begrenzung der Verschiebungen des Substrats (12) in Richtung der Feder (13) in einen mittleren Teil der Feder (13) eine Öffnung (30) eingebracht ist, um einen auf dem Druckglied (10) angeordneten Anschlag (21) durchzulassen, der die genannte Feder (13) trägt.

6. Wandler nach einem der Ansprüche 3 bis 5, dadurch gekennzeichnet, daß die Ränder (15₁, 15₂) des Substrats (12), die gegen die genannte Feder (13) anliegen, eine gerippte Form haben, um die Auflage auf die Kanten (35₁, 35₂, 35₃) der Ränder (15₁, 15₂) zu begrenzen.

7. Wandler nach einem der Ansprüche 3 bis 6, dadurch gekennzeichnet, daß die Ränder (15₁, 15₂) des Substrats (12) mittels Auflageklötzen (37₁, 37₂, 37₃) gegen die genannte Feder (13) anliegen.

8. Wandler nach Anspruch 7, dadurch gekennzeichnet, daß die Auflageklötze untereinander mittels einer Bewehrung (50) verbunden sind.

9. Wandler nach Anspruch 1 oder 2, dadurch gekennzeichnet, daß die Feder (13) mit gebogenem Blatt eine konkave Seite und eine konvexe Seite hat, wobei ein mittlerer Teil des Substrats (12) an einem mittleren Teil der genannten Feder (13) an der konvexen Seite anliegt.

10. Wandler nach Anspruch 9, dadurch gekennzeichnet, daß mindestens ein Anschlag (32₁, 32₂) (33₁, 33₂) entweder auf den äußeren Teilen des Substrats oder auf einem der Druckglieder (10, 11) plaziert ist.

## Claims

1. A strain-gauge transducer (12, 14) comprising:
- a strain gauge pressed between pressure members (10, 11), the strain gauge comprising a plate-shaped substrate (12) provided with strain-detection elements (14),
- at least one spring (13) arranged between said substrate (12) and one of the pressure members (10, 11) so as to be deformed in conjunction with said substrate by pressures exerted by the pressure members (10, 11), characterised in that said substrate (12) exclusively bears on said spring (13) in a floating arrangement, said spring being a curved blade spring having a flexibility larger than that of the substrate (12).

2. A transducer as claimed in Claim 1, said substrate being subject to excursions relative to at least one of the pressure members, characterised in that said excursions are limited by stops (20) (21) (22₁, 22₂) (32₁, 32₂) (33₁, 33₂), which prevent the substrate (12) from reaching breaking points.

3. A transducer as claimed in Claim 2, characterised in that the curved blade spring (13) has a concave surface and a convex surface, edges (15₁, 15₂) of said substrate (12) being in contact with said spring (13) at the side of said concave surface.

4. A transducer as claimed in Claim 3, characterised in that for limiting the excursions of said substrate (12) towards said spring (13) at least one stop (20) (21) is arranged either on a central part of said substrate or on a central part of said spring, the two central parts facing each other.

5. A transducer as claimed in Claim 3, characterised in that for limiting the excursions of said substrate (12) towards said spring (13) a hole (30) is formed in a central part of said spring (13) to allow the passage of a stop (21) arranged on the pressure member (10) supporting said spring (13).

6. A transducer as claimed in any one of the Claims 3 to 5, characterised in that the edges (15₁, 15₂) of said substrate (12) which are in contact with said spring (13) have a toothed shape in order to limit the contact with the teeth (35₁, 35₂, 35₃) of the edges (15₁, 15₂).

7. A transducer as claimed in any one of the Claims 3 to 6, characterised in that the edges (15₁, 15₂) of said substrate (12) are in contact with said spring (13) by means of contact elements (37₁, 37₂, 37₃).

8. A transducer as claimed in Claim 7, characterised in that the contact elements are interconnected by a mounting (50).

9. A transducer as claimed in Claim 1 or 2, characterised in that the curved blade spring (13) has a concave surface and a convex surface, a central part of said substrate (12) being in contact with a central part of said spring (13) at the side of the convex surface.

10. A transducer as claimed in Claim 9, characterised in that at least one stop (32₁, 32₂) (33₁, 33₂) is arranged either on the end portions of the substrate or on one of the pressure members (10, 11).
